# EUROPEAN PATENT APPLICATION

(11) **EP 4 616 983 A1**
(43) Date of publication of application: **17.09.2025**
(21) Application number: 24162981.5
(22) Date of filing: 12.03.2024
(51) Int. Cl.: B23B 51/06, B23C 5/28, B23D 77/00, B23D 77/14, B33Y 80/00

(54) **CUTTING TOOL WITH NOZZLE**

(71) Applicant: AB Sandvik Coromant, 811 81 Sandviken (SE)
(72) Inventor: González Garcia, Diego, 811 81 Sandviken (SE); Llansó Curet, Ferran, 811 81 Sandviken (SE); Castellano Sanchez, Daniel, 811 81 Sandviken (SE); Plaza Serrano, Francisco José, 811 81 Sandviken (SE)
(74) Representative: Sandvik

(57) **Abstract**

Cutting tool 1 comprising a rear end 2 and a front end 3, with a longitudinal center axis L extending from the front end to the rear end. The cutting tool further comprises at least one chip-forming cutting edge 4 for machining the workpiece; a liquid supply conduit 5 extending from the rear end to a nozzle 6 rearward of the front working zone, wherein the nozzle comprises an inlet 7 in fluid connection with the liquid supply conduit, and wherein the nozzle comprises an outlet 8. The nozzle has a closed overall shape with an outer circumference that is larger than of the radial location of the at least one cutting edge. The nozzle outlet is configured such that when liquid is supplied through the liquid supply conduit, the liquid ejected from the outlet forms a liquid barrier to prevent chips formed during machining from escaping through the barrier.

## Description

### FIELD OF THE INVENTION AND PRIOR ART

The present invention related to a cutting tool according to the preamble of claim 1, specifically to a rotating or rotatable hole making tool for internal machining, such as boring or reaming tools.

Cutting tools comprise cutting edges for machining a workpiece. Such cutting tools may be stationary, meaning that they are not rotated; or rotating or rotatable, meaning that are rotated or can be rotated during machining. Rotating or rotatable cutting tools may be boring, reaming or milling tools. A subcategory of cutting tools is hole making tools which may be used to create or enlarge holes (also referred to as bores). In general, reaming and boring tools are similar but reaming tools are used for creating the final surface of the workpiece with very high tolerances. This is also referred to as finishing.

In some instances, the machining takes place on only one section of a workpiece, for example when a boring or reaming tool is used to enlarge one bore in a workpiece. In other cases, the front end of the cutting tool may machine a small bore at the same time as cutting inserts placed axially rearward on a radially wider section of the cutting tool machines a wider bore on the same workpiece. In this manner, two operations may be done simultaneously.

A cutting tool of the above-mentioned type may be for machining housings for electric motors and may comprise three sets of cutting edges for machining three coaxial bores of the workpiece, as illustrated in for example EP3953085 B1. A protective shield is used to keep chips from one set of cutting edges from interfering with another set of insert and/or damaging the surface. This may be particularly beneficial when the workpiece consists of several different materials and chips from a harder material, e.g. steel, may damage the surface of a softer material, e.g. aluminium.

A problem with known solutions is that the shield itself may damage the workpiece or cause friction against the workpiece. Another problem with known solutions is that the shield is heavy, may be worn or damaged and must maintain a tight seal against the workpiece for chips not to get stuck between the shield and the workpiece.

### OBJECT OF THE INVENTION

An object with the present invention is to overcome the short comings of the known solutions and provide an improved and more reliable shield.

### SUMMARY OF THE INVENTION

According to the invention, said object is achieved by means of a cutting tool having the features defined in claim 1.

The cutting tool according to the invention comprises a rear end and a front end, with a longitudinal center axis extending from the front end to the rear end. The cutting tool further comprises at least one chip-forming cutting edge for machining the workpiece; a liquid supply conduit extending from the rear end to a nozzle rearward of the front working zone, wherein the nozzle comprises an inlet in fluid connection with the liquid supply conduit, and wherein the nozzle comprises an outlet. The nozzle has a closed overall shape, e.g. annular or circular, with an outer circumference that is larger than of the radial location of the at least one cutting edge. The nozzle outlet according to the invention is configured such that when liquid is supplied through the liquid supply conduit, the liquid ejected from the outlet forms a liquid barrier to prevent chips formed during machining from escaping through the barrier.

The cutting tool further comprises a longitudinal center axis extending from the rear end to the front end. Said rear and front ends constitute the longitudinal extent of the cutting tool. Rearward or behind in this context refers to point on the cutting tool that is located closer to the rear end. Forward or in front of thus means relatively closer to the front end. The rear end is configured to be mounted in a machine tool spindle or machine tool interface such as a tool holder. The rear end may comprise an interface adapted for mounting in an equivalent machine tool interface, such as Capto or HSK.

The front end comprises at least one chips-forming cutting edge. These cutting edges may be in the form of replaceable cutting insert that are detachably clamped in an insert seat at the front end.

A liquid supply conduit extends from the rear end to a nozzle rearward of the at least one cutting edge. The liquid supply conduit within the cutting tool is for leading liquid from the machine tool through the tool toward the nozzle. The nozzle comprises an inlet in fluid, or liquid, connection with the liquid supply conduit such that the liquid is transferred from the liquid supply conduit into the nozzle through a nozzle inlet. The nozzle further comprises an outlet.

The nozzle extends around the circumference of the tool, axially rearward of the front end cutting edge and thus has a closed shape. Its outer circumference, or periphery, is located outside the at least one cutting edge of the front end such that the outlet is located radially outside the at least one cutting edge. In other word, the perpendicular distance from the longitudinal center axis to the nozzle outlet is greater than that from the longitudinal center axis to the cutting edge.

The nozzle is configured such that when liquid is supplied through the liquid supply conduit at a pressure of e.g. 50-150 bars, into the nozzle inlet, through the nozzle, exiting from the outlet, the liquid ejected forms a liquid barrier to prevent chips formed during machining from escaping through the barrier and thus from preventing chips from damaging to the bore surface of the workpiece or from interfering with other cutting edges.

The closed shape of the nozzle and the nozzle outlet creates a barrier that completely envelopes the at least one cutting, i.e. a cylinder-shaped or cone-shaped barrier around the at least one cutting insert of the front end.

This is of particular advantage when the workpiece consists of two different materials of different hardness and where the harder material is machined by cutting inserts at the front end. The chips are effectively prevented from damaging the sections of the workpiece made of a softer material.

The liquid barrier provides an effective protection while advantageously avoiding the problems related to known solutions as it is not prone to wear, damage or misalignment.

According to an embodiment of the invention, the nozzle may be attachable and detachable from the cutting tool. It may then be attached to the cutting tool such that the liquid inlet of the nozzle aligns with the liquid supply conduit of the cutting tool. The nozzle thus envelopes the cutting tool at the location where the liquid supply exits the cutting tool and is attached or fastened such a fluid connection is achieved. The nozzle may, according to an embodiment of the invention, be annular, circular, or ring-shaped, and to be attached on a cutting tool with a circular outer circumference. The nozzle may also be of another shape to match the outer circumference of a section of the cutting tool at a specific axial location.

The fastening may be achieved with screws through the nozzle into the cutting tool body or with equivalent means. An attachable/detachable nozzle is advantageous as it allows the nozzle to be replaced so that a nozzle with another type of outlet can be fitted instead. Another type of outlet may be one where the outlet is larger, to create a thicker barrier, or an outlet with a different angle in relation to the longitudinal center axis. It may also be advantageous to be able to move the nozzle to a different axial position of the tool. At any unused nozzle positions, the liquid supply conduit would then have to be plugged or blocked.

According to an embodiment of the invention, the nozzle comprises a plurality of spaced-apart inlets. A better liquid flow may then be achieved. The spaced-apart inlets on the nozzle may be configured to be aligned with matching liquid supply outlets on the cutting tool.

According to an embodiment of the invention, the nozzle may comprise one continuous outlet extending the whole circumference of the nozzle, e.g. an annular slit around the nozzle. Alternatively, the nozzle may comprise a plurality of spaced-apart outlets. In this way, the properties of the liquid barrier may be adapted to suit the type of chips that are created in a particular type of machining process while allowing the possibility to control the liquid flow rate. In this way, only the flow rate necessary to create a barrier for a particular type of chip is used and thus reduces consumption. The distance between the spaced-apart outlets may have to be adjusted so that a liquid barrier is achieved and will depend on the size of the individual outlets. Even if the liquid barrier is not continuous, i.e. not uninterrupted, the liquid stream from the plurality of outlets may be brought close enough to one another so that chips are not able to escape through it. A factor that may influence this is for example chip length as a long chip may, as it grows, at first break the barrier but as it becomes longer be force back in by the liquid. It nevertheless remains away from the rest of the workpiece, where it may cause damage.

In an embodiment of the invention, the cutting tool comprises a second set of cutting edges at a location axially rearward of the front end cutting edge. This is advantageous as two separate sections of the workpiece may be machined in the same machining process. Generally, this means that the front end cutting edges machine a bore of a smaller diameter whereas the second set of insert machine a larger, coaxal, bore behind the front end in the longitudinal direction. In this way, two coaxial bores are machined without tool change. To clarify, it can be useful to refer to an outer and an inner section of the workpiece, where the inner section is the one machined by the front end of the cutting tool.

Where the tool comprises a second set of inserts, the liquid barrier is of particular advantage as chips from the front set of inserts otherwise may interfere with the second set of inserts and damage the cutting edges or workpiece, particularly if the front set machines a material that is harder than that machined by the second set of inserts. The harder material machined by the front set of cutting insert may be steel, and the softer material machined by the second set of inserts may be aluminium.

In an embodiment of the invention, the nozzle may comprise secondary outlets. The nozzle may comprise secondary outlets that are aimed toward the cutting insert in order to provide flushing and cooling of the cutting insert or to assist with chip breaking in the cutting process.

In an embodiment of the invention, the nozzle may comprise secondary outlets directed toward the back end of the cutting tool. These secondary outlets may be directed backward at an angle in relation to the longitudinal center axis so that the liquid stream is directed partly backward and partly toward the inner wall of the bore that is machined. In this way, the liquid ejected from these secondary outlets may assist in flushing chips of the bore, and thus out and away from the workpiece so that chips do not accumulate inside.

In an embodiment of the invention, the nozzle may comprise secondary outlets directed both toward the cutting inserts and toward the back end of the tool as previously described.

In an embodiment of the invention, the cutting tool may be used to machine an electric motor housing. The housing may be made of two different materials where e.g. a bearing bore may be in a part of the housing made of e.g. steel while e.g. a stator bore may be in the part made of e.g. aluminium.

Electric motor housing and other components may be made of alloys that generate very long chips, which puts high demand on the chip controlling properties of the cutting inserts used. The present invention alleviates this as the chips may also be controlled by the liquid barrier.

In an embodiment of the invention, regardless of the configuration of the outlets previously described in various embodiments, the liquid supply conduit may be the same as used in cutting tools with a regular coolant supply, which may be fed with a standard coolant liquid from the machine tool.

According to an embodiment of the invention, the nozzle is preferably made of metal, such as steel or aluminium.

According to an embodiment of the invention, the nozzle is manufactured in an additive manufacturing process such as laser powder bed fusion or binder jetting.

According to an embodiment, the nozzle is an integral part of the cutting tool.

### DESCRIPTION OF THE DRAWINGS

With reference to the appended drawings, a specific description of embodiments of the invention cited as examples follows below. In the drawings:
- Fig 1: is a perspective view of a rotating cutting tool according to an embodiment of the present invention,
- Fig 2: is a cross sectional view of the rotating cutting tool of Fig 1,
- Figs 3a-c: show multiple views of the nozzle of an embodiment,
- Fig 4: is a cross sectional view of an embodiment of the invention,
- Fig 5: is a cross sectional views of the nozzle of the embodiment of Fig 4,
- Figs 6a-b: is a perspective of the rotating cutting tool according to an embodiment with the liquid barrier turned off (6a) and turned on (6b)
- Fig 7a-c: show three cross sectional views of the workpiece with the rotating cutting tool according to an embodiment in different stages of performing a cutting operation in a workpiece. In figs 7b and 7c, the liquid barrier is activated.

### DETAILED DESCRIPTION OF EMBODIMENTS OF THE INVENTION

With reference to the figures, embodiments of the invention will be described in detail.

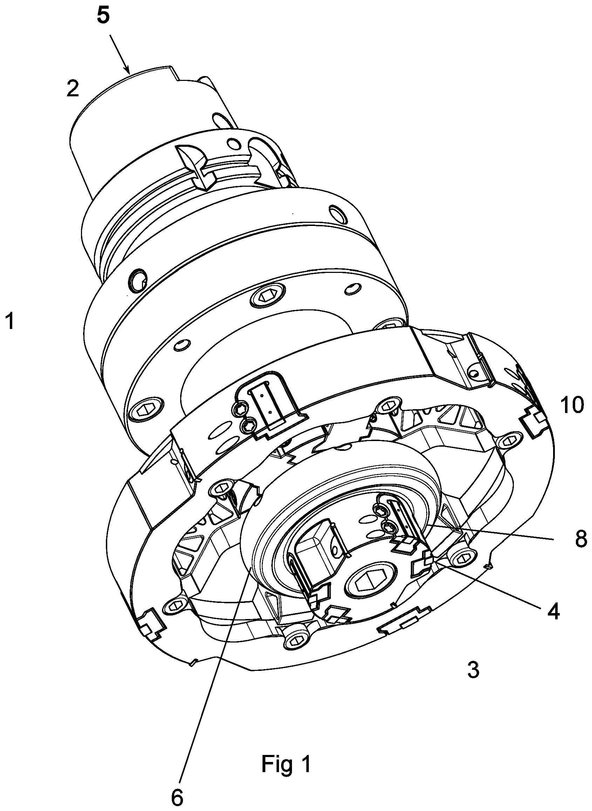

According to an embodiment of the invention, the cutting tool (1), as seen in figure 1, is a reaming tool for machining an electric motor housing (12). The cutting tool comprises a rear end (2) and a front end (3) with a central rotational axis (L) extending from the back end to the front end. The front end comprises a plurality of cutting edges (4) in the form of replaceable cutting inserts; and the cutting tool further comprises a liquid supply conduit (5) extending from the rear end to an annular nozzle (6). The nozzle comprises a plurality of inlets (7) and an annular, uninterrupted, outlet (8) formed as an annular slit in the nozzle. The nozzle is in fluid connection with the with the liquid supply conduit (5) of the cutting tool and attached thereto with screws extending through screw holes (11) and into the cutting tool. A liquid can thus flow from the liquid supply conduit of the cutting tool into the nozzle inlets without leaking.

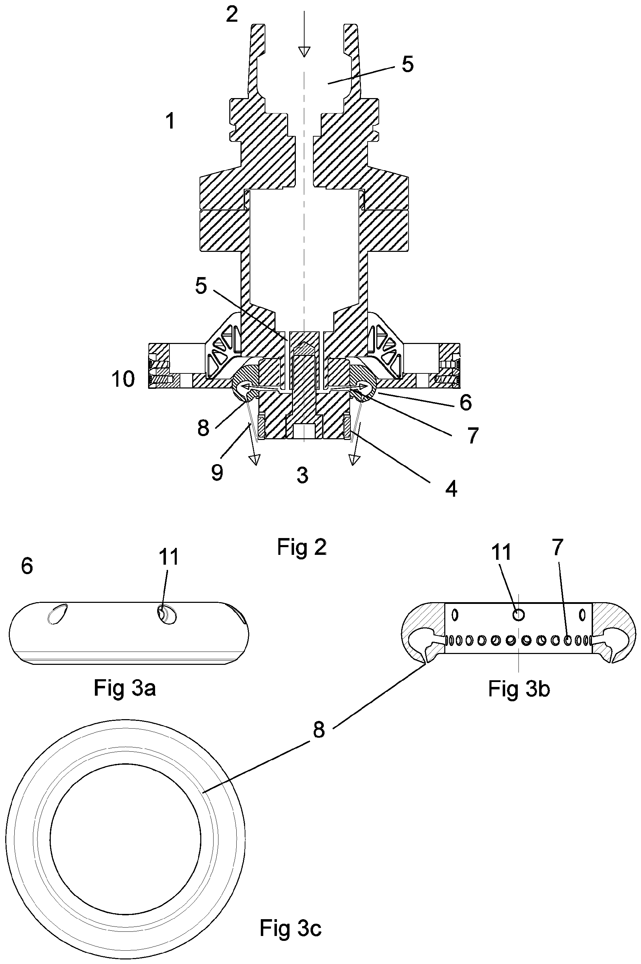

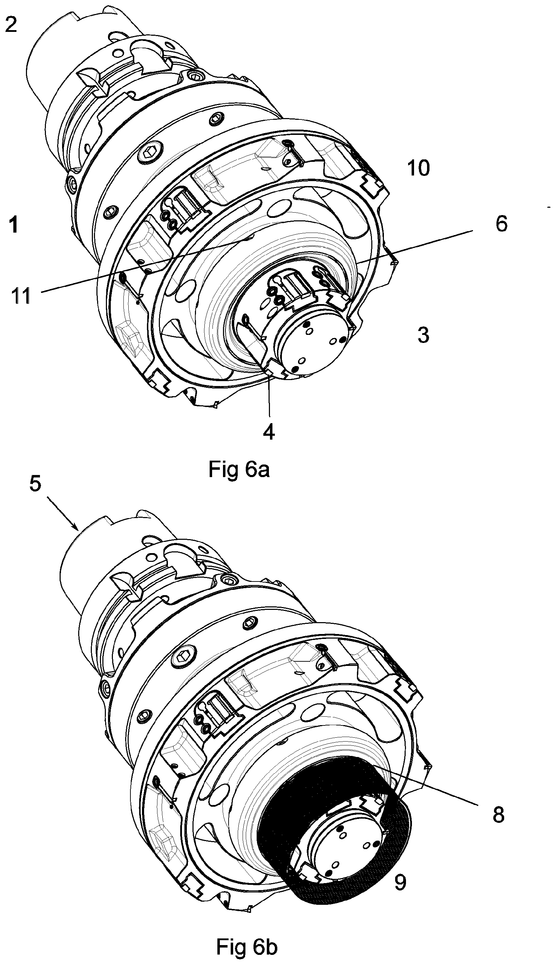

The outer circumference of the annular nozzle is located radially outside the cutting inserts and the annular outlet has a circumference that locates it radially outside the cutting inserts as can be seen in figure 2. The annular outlet (8) is configured as a slit in the nozzle and when liquid is supplied through the liquid supply and into the nozzle inlets, the liquid goes through the nozzle to the outlet. When the liquid is ejected from the outlet (8), it forms a liquid barrier (9) as can be seen in figures 3, 4, 6b, 7b and 7c. The outlet slit (8) is thus wide enough for the liquid to form a barrier strong enough to prevent cutting chips from escaping through it but narrow enough for the barrier to remain uninterrupted around the outlet at the given pressure. This outlet configuration is made by a skilled person by taking into account the type of chips that are to be prevented from escaping and the capacity of the liquid supply conduit, e.g. flow rate and pressure.

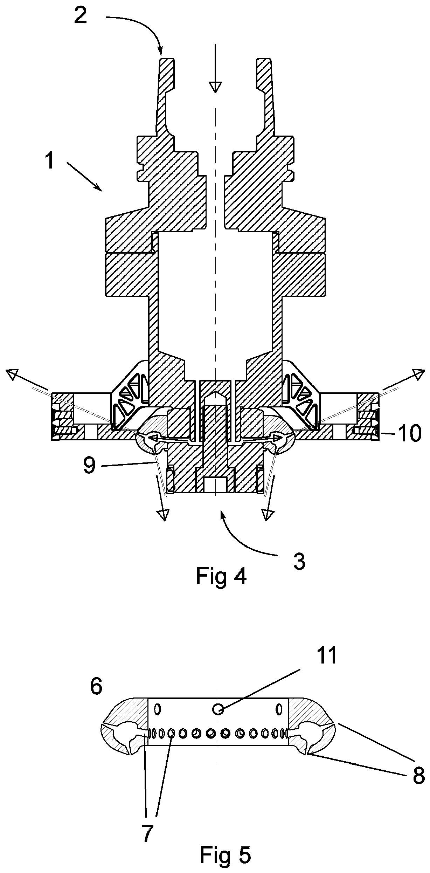

According to the embodiment, the nozzle is attachable to and detachable from the cutting tool as seen in figures 3a and 3b. This is achieved, as previously described, with the screws and screw holes (11) for attaching the to the cutting tool. Changing the nozzle may be advantageous if the tool is moved to a different machine tool with another capacity in providing liquid, or if the nozzle is changed to a type according to another embodiment of this invention to provide additional features as seen in figure 5.

The nozzle in the present embodiment comprises a plurality of spaced-apart inlets that are in fluid connection with corresponding holes in the cutting tool where the liquid supply conduits exit and from which liquid is supplied. The number of inlets, and their size, will depend on the flow rate and pressure that are necessary to achieve a liquid barrier, and that are provided by the machine tool, and can be adjusted accordingly.

According to this embodiment of the invention the nozzle is annular due to the fact that the reaming tool of the embodiment is a rotating or rotatable tool that has a circular axial cross section. As the tool is assembled, the nozzle is attached to the cutting tool, as described above, on a section of the cutting tool where the outer circumference of the cutting tool and the inner circumference of the nozzle have corresponding diameters and that is rearward of the cutting inserts of the front end as seen in figures 2, 3a-c.

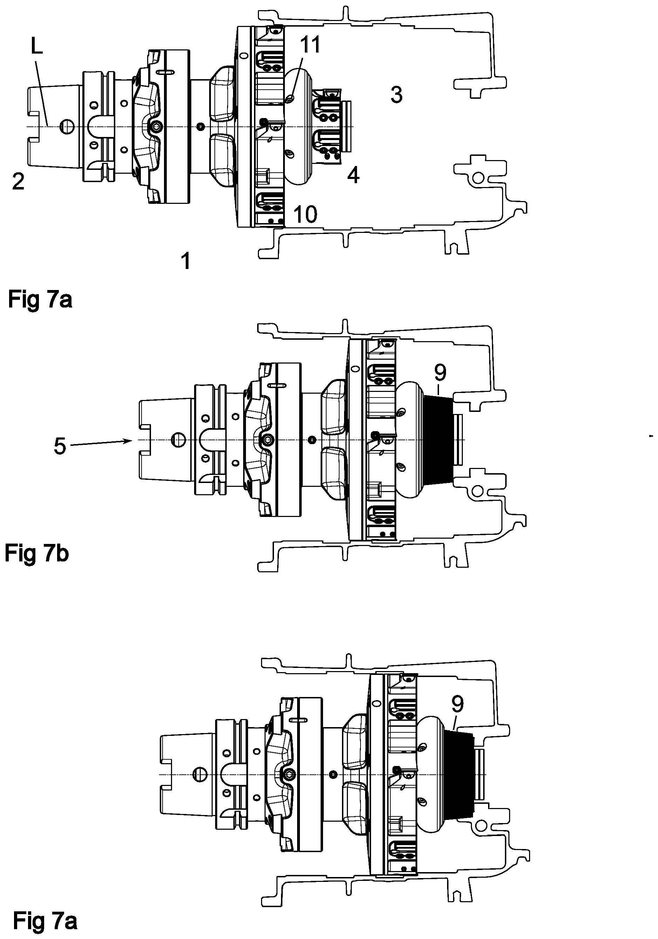

The cutting tool of the present of the embodiment described here comprises a second set of cutting inserts. As the cutting tool is a reaming tool for machining electric motor housings, two different sections, and diameters, of the workpiece are machined in the same operation. The workpiece has an inner section, i.e., machined by the front end of the cutting tool, and an outer section that is wider and is machined by said second set of inserts. As can be seen in figures 7a to 7c, the cutting tool starts from a position where it is completely outside the workpiece. As the cutting process begins, the cutting tool enters into the workpiece and starts machining the wider section as the second set of inserts come in contact with the workpiece (fig. 7a). As the machining process progresses (fig. 7b), the cutting inserts of the front end come in contact with the inner section of the workpiece, where the smaller diameter is machined (fig. 7c). In the embodiment, this section is made of a material that create longer chips that may risk damaging other sections of the workpiece. As the inner part is machined, the liquid barrier prevents the chips formed from escaping and causing damage to the workpiece.

In the embodiment of the invention, the cutting tool liquid supply conduit is connected to a regular coolant liquid supply conduit of the machine tool. Using a nozzle from another embodiment, regular cooling and chip breaking capabilities can be achieved as the nozzle then may have outlets directed toward the chip forming area.

## Claims

1. A cutting tool for machining a workpiece, comprising:
- a rear end and a front end,
- wherein the front end comprises at least one chip-forming cutting edge for cutting a section of the workpiece,
- a longitudinal center axis extending from the rear end to the front end,
- a liquid supply conduit extending from the rear end of the cutting tool to a nozzle rearward of the at least one cutting edge,
- wherein the nozzle comprises an inlet in fluid connection with the liquid supply conduit, and
- wherein the nozzle comprises an outlet,
**characterised in that**
- the nozzle has a closed shape wherein the outer circumference of the nozzle and the outlet are located radially outside the at least one cutting edge, and
- **in that** the nozzle outlet is configured such that when liquid is supplied through the liquid supply conduit, the liquid ejected from the outlet forms a liquid barrier to prevent chips formed during machining from escaping through the barrier.

2. The cutting tool according to claim 1, wherein the nozzle is attachable/detachable to the cutting tool.

3. The cutting tool according to any of the claims 1-2, wherein the nozzle is annular.

4. The cutting tool according to any of the claims 1-3, wherein the nozzle comprises a plurality of spaced-apart inlets.

5. The cutting tool according to any of the preceding claims, wherein the outlet is formed as an annular slit in the nozzle.

6. The cutting tool according to any of the claims 1-4, wherein the nozzle comprises a plurality of spaced-apart outlets.

7. The cutting tool according to any of the preceding claims, comprising at least one additional chip-forming cutting edge located axially rearward and radially outward of the cutting edges of the front end.

8. The cutting tool according to any of the preceding claims, wherein the cutting tool is a rotating cutting tool.

9. The cutting tool according to any of the preceding claims, wherein the cutting tool is a reaming tool.

10. The cutting tool according to any of the preceding claims, wherein the liquid supply conduit is a coolant liquid supply conduit.

11. The cutting tool according to any of the preceding claims, wherein the nozzle comprises a secondary outlet directed towards the cutting inserts for chip breaking and cooling.

12. The cutting tool according to any of the preceding claims, wherein the nozzle comprises a secondary outlet directed rearward for flushing chips out of the workpiece.

13. The cutting tool according to any of the claims 1-6, wherein the cutting tool is a milling tool.

14. A nozzle for use in a cutting tool according to any of the preceding claims.
